# EUROPÄISCHE PATENTSCHRIFT

(11) **EP 4 153 441 B1**
(45) Veröffentlichungstag und Bekanntmachung des Hinweises auf die Patenterteilung: **27.08.2025**
(21) Anmeldenummer: 21786901.5
(22) Anmeldetag: 04.10.2021
(51) Int. Cl.: B60K 11/08, F01P 7/10

(54) **LUFTFÜHRUNGSSTEUERUNG FÜR EIN KRAFTFAHRZEUG**
AIR GUIDANCE CONTROL UNIT FOR A MOTOR VEHICLE
COMMANDE DE GUIDAGE D'AIR POUR UN VÉHICULE AUTOMOBILE

(30) Priorität: 02.10.2020 DE 102020125917
(43) Veröffentlichungstag der Anmeldung: 29.03.2023
(73) Patentinhaber: Montaplast Gesellschaft mit beschränkter Haftung, 51597 Morsbach (DE)
(72) Erfinder: PÜTZ, Andreas, 53804 Much (DE); EWERT, Andreas, 51545 Waldbröl (DE); SCHWEGMANN, Sebastian, 53797 Lohmar (DE); MÜLLER, Johannes, 51545 Waldbröl (DE); MIKA, Frank, 51588 Nümbrecht (DE)
(74) Vertreter: Bobzien, Hans Christoph
(86) Internationale Anmeldenummer: PCT/EP2021/077287
(87) Internationale Veröffentlichungsnummer: WO 2022/069765

(56) Entgegenhaltungen:
- WO-A1-2018/158513
- WO-A1-2019/197747
- DE-A1- 102017 211 577
- DE-U1- 202011 050 032
- FR-A1- 2 975 949
- GB-A- 962 336

## Beschreibung

Die Erfindung betrifft eine Luftführungssteuerung, vorzugsweise einsetzbar in einen Rahmen, der mindestens eine Luftöffnung zum Hindurchströmen von entlang einer Luftströmungsrichtung strömender Luft umgibt, einer Verschlussvorrichtung, die zwischen einer die Luftöffnung freigegebenen Öffnungsstellung und einer die Luftöffnung zumindest teilweise verschließenden Schließstellung mittels einer Verstellvorrichtung verstellbar ist zur selektiven Freigabe und zum Verschließen der Luftöffnungen für ein Thermo-Management eines in Luftströmungsrichtung nachgelagerten KFZ-Aggregats, insbesondere eines Kühlers, z.B. eines Wasserkühlers für einen Verbrennungsmotor oder eines Kühlers, z.B. zur Belüftung eine Bremse oder Batterie.

Daneben betrifft die Erfindung eine KFZ-Anordnung umfassend die Luftführungssteuerung an einem Eingangsende einer Luftleitung, eine sich entlang einer Luftströmungsrichtung erstreckende Luftleitung und einen von der Luft umströmten Aggregat, insbesondere einen Fahrzeugkühler, z. B. der Wasserkühler für einen Verbrennungsmotor oder ein Kühler zur Belüftung der Bremsen oder eine Batterie.

Die Erfindung beschäftigt sich im weitesten Sinne mit einer Vorrichtung für das Thermo-Management eines Aggregats, insbesondere einer Vorrichtung, die in oder hinter einem Rahmen bzw. einem Kühlergrill eines Kraftfahrzeugs, vorzugsweise an dessen am Vorderende angeordnet werden kann und wobei über die Verschlussvorrichtung der Luftstrom des Fahrtwinds durch den Rahmen definierte bzw. aufgespannte Ebene reguliert werden kann, indem die Verschlussvorrichtung in oder hinter dem Rahmen die mindestens eine Luftöffnung selektive Öffnen oder Verschließen kann.

Eine solche Luftführungssteuerung wird mitunter auch als "Active Grill Shutter" bezeichnet, weil diese am Vorderende eines Kraftfahrzeugs hinter eine hinter Kühlergrill oder Kühlergitter eines Kraftfahrzeugs.

Die Luftöffnung kann also wahlweise in Abhängigkeit von der Motorleistung durch die Verschlussvorrichtung verschlossen werden.

Der Rahmen spannt also eine Rahmenebene auf, die von dem Rahmen umfänglich umschlossen ist und gleichzeitig die Luftöffnung definiert. Diese Luftöffnung ist durch die Verschlussvorrichtung je nach der Leistung des Aggregats selektiv öffnen- und verschließbar. Geschlossen wird die Luftführungsteuerung z.B. für die schnellere Erwärmung z.B. eines Motors in der Startphase und geöffnet wird die Luftführungsteuerung unter Volllast zur besseren Kühlung des Motors.

Als Verschlussvorrichtung kommen Rollosysteme mit einem auf- und abwickelbaren Rollo sowie antreibbare Einzelklappen zum Einsatz.

Das Rollo wird auf eine antriebbare Welle ab- und aufgewickelt zwischen der auf die Welle aufgewickelten Öffnungsstellung und der abgewickelten Schließstellung. Ein solches Rollo-System ist beispielsweise aus der DE 10 2017 211 577 A1 bekannt. Weitere Rollo-Systeme sind bekannt aus US 1,379,412, DE 10 2018 201 469 A1, DE 10 2019 106 828 A1 und WO 2019/197747 A1.

Die Klappen umfassen mehrere, drehbar über- oder nebeneinander in dem Rahmen angeordnete Klappen mit einer sich quer zur Fahrrichtung ersteckenden Klappenlängsachse, die jeweils drehbar in dem Rahmen aufgenommen ist und Klappenflächen umfasst. Die Klappen können aus der geschlossenen Schließstellung, in welcher sich die Klappenflächen im Wesentlichen quer zur Fahrtrichtung erstrecken in eine Öffnungsstellung um Ihre jeweilige Klappenlängsachse gedreht werden, in welcher sich die Klappenfläche ganz oder teilweise parallel zur Fahrtrichtung erstreckt.

Klappenanordnung der genannten Art sind beispielsweise bekannt aus EP 2 855 185 B1, WO 2019/197747 A1, DE 20 2011 050 032 U1, FR 2 975 949 A1, WO 2018/158513 A1 DE 10 2017 211577 A1 und GB 962 336 A.

### Nachteile am Stand der Technik

Zur Regulierung des Lufteintritts wird bei bekannten Rollosystemen eine Abdeckung, beispielsweise über einen Seilzug, angetrieben, um so die Öffnungen des Rahmens verschließen bzw. freigeben zu können. Nachteilhaft ist hierbei das das aufrollen in einer Richtung verläuft und somit einen längeren Weg zum Freigeben der Luftzufuhr benötigt.

Weitere Nachteile zeigen sich bei bekannten Rollosystemen dadurch, wo die Abdeckung beispielsweise über einen Seilzug, angetrieben wird, um so die Öffnungen des Kühlergrills verschließen bzw. freizugeben. Seilzüge könnten hier Nachteilig sein, da sie über Umlenkrollen laufen müssen und somit schneller verschleißen, verkanten oder aus der Führung springen können und die Regulierung der Kühlung aussetzt, somit zu enormen Schäden des Fahrzeuges bzw. des Motors aufgrund einer unzureichenden Kühlung führen kann. Dadurch wird eine Klimatisierung des Fahrzeugs mit Frischluft behindert.

### Aufgabe

Aufgabe der Erfindung ist es, die Nachteile aus dem Stand der Technik zumindest teilweise zu vermeiden und insbesondere eine kostengünstige, verlässliche und kompakte Luftführungssteuerung vorzusehen.

### Erfindung

Die Erfindung löst diese Aufgabe durch die Merkmale des unabhängigen Anspruchs 1. Vorteilhafte, aber nicht zwingende Merkmale sind in den Unteransprüchen wiedergegeben.

Die realisierte Luftführungssteuerung ist kompakt und realisiert auf engem zur Verfügung stehenden Bauraum die Funktion der Luftführungsteuerung mit einem Faltsystem zuverlässig erfüllt.

Die Erfindung ermöglicht ein schnelles Öffnen und Schließen, und ist einfach an kompakte Abmessungen anpassbar, so dass es sich leicht in bestehende Systeme im FFZ integrieren lässt, z.B. in ein Kühlergitter, und umfasst zudem wenige Bauteile.

### Beschreibung der Erfindung

Die Lösung sieht vor, dass die Verschlussvorrichtung eine sich quer zur Luftöffnung erstreckende und federvorgespannte Federwickelwelle umfasst, auf welcher der als Verschlussvorrichtung fungierender Stoff mit einem ersten Stoffende, insbesondere einem Stoff-Oberende durch Federspannung aufwickelbar ist, an welchem der Stoff also befestigt ist und welcher insofern auch als Befestigungsende bezeichnet werden kann; somit bilden die Federwickelwelle mit dem darauf aufgewickelten Stoff ein durch die Federkraft selbstaufrollendes Stoffrollo. Ferner umfasstdie Verstellvorrichtung eine sich ebenfalls quer und parallel beabstandet versetzt zu Federwickelwelle erstreckende, drehbar in der Luftöffnungen oder dem Rahmen gelagerte Verstellspindel mit gegenläufigen Gewindeabschnitten an gegenüberliegenden Enden. Auf den Gewindeabschnitten laufen vorzugsweise als Muttern ausgebildete Mitnehmer und die Mitnehmer, vorzugsweise ausgebildet als Muttern, sind über drehbare an den Mitnehmern angelenkte und vorzugsweise geführte Verbindungsarme mit einem dem Befestigungsende gegenüberliegenden und somit nicht mit der Federwickelwelle verbundenen Freiende verbunden ist.

Bei der Rotation der Verstellspindel durch einen Aktuator, insbesondere umfassend einen Elektromotor, wird somit das Lineargetriebe in Gang gesetzt und die Rotation der Verstellspindel bewirkt eine Bewegung der Mitnehmer/Muttern auf den gegenläufig ausgebildeten Gewindeabschnitten, sodass je nach Drehung der Verstellspindel über die Verbindungsarm der Stoff des Stoffverschlusses auf die Federwickelwelle, welche also federvorgespannt ist, aufgewickelt wird oder bei Bewegungen in die entgegengesetzte Richtung gegen die Federspannung der Federwickelwelle von dieser abgewickelt wird.

Es liegt zwar grundsätzlich auch im Rahmen der Erfindung, dass die Verschlussvorrichtung nur eine Federwickelwelle umfasst und die Luftöffnung insofern durch nur einen Stoffverschluss zu verschließen ist, der also in der Schließstellung die gesamte Luftöffnung verschließt.

Die besonders bevorzugte, weil schneller zu Öffnen und zu Schließende Ausführungsform sieht vor, dass die Verstellspindel etwa in der Mitte der Luftöffnungen angeordnet ist und dass je eine Federwickelwelle mit einem aufgewickelbarem Stoffverschluss in gleichen Abstand nach Außen im Rahmen oder aufnehmenden Fügepartner im Verhältnis zu der Verstellspindel angeordnet ist. Dieses reduziert also die Zeit zum Öffnen und Schließen der Gesamtöffnung um die Hälfte, weil jeweils nur die hälftige Verschlussvorrichtung geöffnet bzw. geschlossen werden muss.

Auch diese Lösung ist besonders bauraumoptimiert, ermöglicht also das verstärkt auf besonders geringem Raum und sehr unabhängig von anderen Lösungen.

Eine besonders gute und harmonische Führung der an den Verschlussstoff angreifenden Verbindungsarm zum Vermeiden eines ungewünschten Verklemmens kann dadurch realisiert werden, dass die Verbindungsarme zusätzlich Führungen umfassen, welche die Verbindungsarme beim Öffnen und Schließen führen. Vorzugsweise ist die Führung als vorzugsweise bogenförmige Kulissenführung ausgebildet, was bedeutet, dass diese eine in einer Führungsfläche ausgebildete Bahn oder Ausnehmung aufweisen, entlang der sich ein drehbar an dem Stoffrollo angelenkter Verbindungsstift bewegt.

Diese Kulissenführung umfasst vorzugsweise mindestens einen bogenförmigen Führungsabschnitt, in welchem das mit der Federwickelwelle verbundene Ende der Verbindungsarme beweglich geführt ist. Der bogenförmige Führungsabschnitt ist dabei so gestaltet, dass er die Bewegung der Verbindungsarme aus der Schließposition in die Öffnungsposition vereinfacht und umgekehrt.

Bevorzugt ist jeder Verbindungsstift, der drehbar an dem Stoffrollo anglenkt ist, in einer Führung geführt.

Bei der bevorzugten Ausführungsform mit der mittig angeordneten Verstellspindel und beidseitig von dieser distanzierten Stoffrollos, deren Enden jeweils über einen Verbindungsarm mit einem Mitnehmer der Verstellspindel verbunden sind, umfasst die Luftführungssteuerung somit vier Führungen für jeden der drehbar an den Enden der Stoffrollos angelenkten Verbindungsarme führt.

Bei einer besonders stabilen Ausgestaltung ist an dem Proximalende des Stoffverschlusses eine Stabilisierungsleiste vorgesehen, von welcher der Stoffverschluss in Form gehalten wird, also über die Breite der Luftöffnung so gestreckt wird, dass diese faltenfrei ist und sich insofern auch harmonisch und leicht auf die Federwickelwelle aufwickeln lässt.

Bevorzugt ist diese Stabilisierungsleiste mit dem Proximalende des Stoffverschlusses verbunden, entweder durch Verkleben, Verschweißen, durch Verklipsen oder auch durch Spritzgießen, z. B. durch Herstellen des Stoffverschlusses in einem ersten Schritt und sodann Hinterspritzen mit der Stabiliserungsleiste. Beim Verklipsen kann die Stabilisierungsleiste dann zwei Leistenteile umfassen, die beidseitig am Proximalende des Verschlussstoffes angelegt und über durch den Stoffverschluss in Einbaulage hindurchragende Stiftverbinder oder eine Verbindungsleiste miteinander verbindbar sind, besonders bevorzugt unlösbar miteinander verbindbar sind.

Vorzugsweise besteht die Verschlussvorrichtung oder genauer deren Bestandteile aus Kunststoff, besonders bevorzugt sind diese als Kunststoffspritzgussteile ausgebildet. Als besonders vorteilhaft hat sich die Verwendung der folgenden Kunststoffe erwiesen: Polyester oder TPO (Thermo-plastische-Olefine).

Besonders kosteneffizient lässt sich der Stoffverschluss fertigen, indem dieser und die angeformte Stabilisierungsleiste in einem sogenannten One-shot-Verfahren hergestellt werden, bei dem also beide Teile in einem Spritzgusszyklus in einer Spritzgussmaschine hergestellt werden.

Die erfindungsgemäße KFZ-Anordnung umfasst die zuvor beschriebene Verschlussvorrichtung und ein Aggregat, insbesondere ausgebildet als Kühler, sowie evtl. noch einen Strömungskanal zur Luftleitung zwischen einem Lufteingang und einem Luftausgang, der z.B. zwischen einem anderen Bauteil und dem Aggregat angeordnet sein kann und wobei der Luftzugang über die Verschlussvorrichtung reguliert wird.

Zur Vereinfachung der Montage ist die Verschlussvorrichtung vorzugsweise in einem Rahmen angeordnet, der mit dem KFZ verbaut werden kann; die Verschlussvorrichtung kann jedoch ohne Rahmen in eine entsprechend ausgebildete Luftöffnung verbaut werden, so dass der Rahmen kein zwingender Bestandteil der Erfindung darstellt.

Bevorzugt sitzt die Verschlussvorrichtung an einem Vorderende des Kraftfahrzeugs angeordnet, z.B. in einem Kühlergitter, und kann damit den Luftwiederstand (CW-Wert) des Fahrzeugs durch Öffnen und Schließen beeinflussen.

Die folgenden Ausführungen betreffen weitere vorteilhafte Ausgestaltungen der Erfindung.

In dem Rahmen können quer zur Luftströmungsrichtung, also quer ersteckend zu einer durch den Rahmen aufgespannten Rahmenfläche Versteifungsrippen eingebracht sein. Dieses können auch beliebig ausgebildet sein, z.B. als Werbung, Zulieferer Logo oder spezifisches OEM Zeichen.

Der Rahmen und das Verschlusssystem können entweder einzeln hinter Kühlergitter angeordnet sein oder modular aus mehreren Einzelrahmen zugeordneten Verschlussvorrichtungen zu einem Gesamtrahmen zusammensetzt werden.

Das System ist also modular erweiterbar gestaltet, wobei ein Aktuator/Antrieb für die Verstellvorrichtung jeder angetriebenen Welle zugeordnet sein kann, aber auch über ein Koppelglied mit mehreren Wellen verbunden sein kann.

Bevorzugt Ausführungsformen sehen eine integrierte Stoff-Temperierung des jeweiligen Stoffverschlusses vor, womit gemeint, dass eine oder mehrere Drähte in dem Stoff vorgesehen sind, z. B. eingespritzt sind, besonders bevorzugt mittels der 2-K-Technologie. Mittels dieser Drähte oder dieser Temperierung ist somit eine On Board Diagnostic ("OBD2") der Verschlussvorrichtung bzw. dessen Ausfalls möglich. Wird der Draht zerstört oder dessen Leitfähigkeit geändert, was z.B. bei einer Zerstörung der Verschlussvorrichtung auftritt oder bewegt sich der Aktuator zur Betätigung leichtgängiger oder schwerer, deutet dieses auf das Vorhandensein eines Defekts oder eines Gegenstands innerhalb der Luftöffnung hin, die dann selektiv genau behoben werden kann.

Erfindungsgemäß können eine oder mehrere Rahmen mit Verschlussvorrichtungen vorgesehen sein, wobei vorzugsweise jede Verschlussvorrichtung für jeden Rahmen einzeln steuerbar ist. Alternativ können auch mehrere Verschlussvorrichtungen für mehrere Rahmen oder mehrere Luftöffnungen gleichzeitig gesteuert werden, z.B. mehrere Luftöffnungen in einem Kühlergrill über Aktuator und verbunden mit einem Koppelglied.

Die Verschlussvorrichtungen können direkt in dem Rahmen bzw. mehrere Rahmen umfassenden Kühlergrill eingesetzt werden bzw. sind in diesen einsetzbar. Insofern muss der Rahmen nicht notwendigerweise vorhanden sein. Es reicht vielmehr aus, dass die Klappen umfassende Verschlussvorrichtung in einem Rahmen einsetzbar, vorzugsweise einschnappbar ist.

In den Rahmen oder eine Luftöffnung einsetzbare Ausführungsformen umfassen vorzugsweise plattenartig ausgebildete Seitenlager, in welche die Verschlussvorrichtungen einsetzbar sind.

So kann die vorgefertigte Baugruppe umfassend die jeweilige Verschlussvorrichtung und die Seitenlager einfach bedarfsgerecht in die entsprechende Luftöffnung eingesetzt werden, z.B. in den Rahmen eines Kühlergitters oder dergleichen.

Alle Lösungen können entweder direkt in dem Rahmen mit der mindestens einen, vorzugsweise mehreren Luftöffnungen ausgebildet sein, sodass in jeder Luftöffnung eine derartige Verschlussvorrichtung angeordnet ist, wobei auch mehrere Verschlussvorrichtungen in verschiedenen Luftöffnungen über einen gemeinsamen Aktuator antreibbar sind.

Der Stoff der Verschlussvorrichtungen zum selektiven Verschließen der Luftöffnungen und die weiteren Bauteile der Luftführungssteuerung können besonders vorteilhaft einstückig gefertigt, insbesondere im 2K-Spritzgusskörper Verfahren, wobei der Stoff vorzugsweise ein Faserverbundwerkstoffe ist und die sonstigen Bauteile, wie der Rahmen, und die Wellen einen festen Kunststoff darstellen.

Weitere Merkmale und Vorteile der der vorliegenden Erfindung werden deutlich anhand der nachfolgenden Figurenbeschreibung bevorzugter Ausführungsbeispiele unter Bezugnahme auf die beiliegenden Abbildungen.

In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen.

Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, "und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Sämtliche Merkmale der jeweiligen Ausführungsbeispiele seien hierbei unabhängig voneinander auch allgemein im Rahmen der Erfindung offenbart. Gleiche Bezugsziffern der Figuren beziehen sich auf gleiche Bauteile bzw. Merkmale. Es zeigen:
- Figur 1: eine isometrische Frontansicht einer nicht erfindungsgemäßen Luftführungssteuerung mit
- Figur 2: Faltenbalg mit Schiebetechnik; eine vergrößerte Seitenansicht des Faltenbalgs mit Schiebetechnik gemäß Figur 1;
- Figur 3: eine Ausführungsform mit zwei Faltenbalgs mit Schiebetechnik gemäß Figur 1 nebeneinander angeordnet;
- Figur 4: die Ausführungsform gemäß Figur 2 in der Stirnansicht in Öffnungsstellung;
- Figur 5: die Ausführungsform gemäß Figur 4 in Schließstellung;
- Figur 6: eine Frontansicht der Ausführungsform der Erfindung mit Verschlussmaterial mit Spindeltrieb in Öffnungsstellung;
- Figur 7: die Ausführungsform gemäß Figur 6 in Schließstellung;
- Figur 8: eine Frontansicht einer nicht erfindungsgemäßen Luftführungssteuerung mit Schiebedrehmechanismus in Öffnungsstellung;
- Figur 9: eine Rückansicht der Luftführungssteuerung gemäß

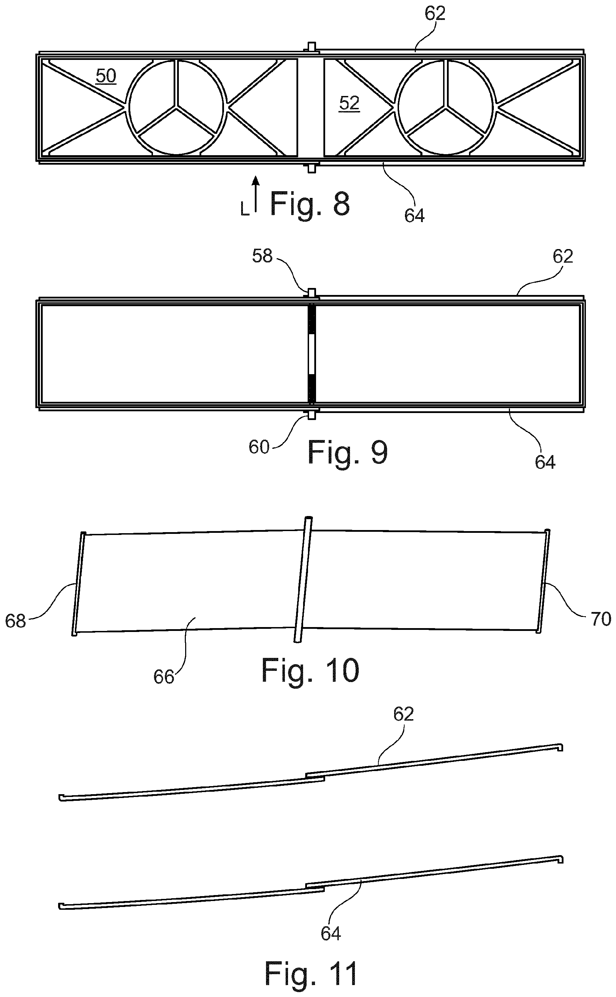

- Figur 8: von hinten in Schließstellung;
- Figur 10: eine Anordnung mit der mittleren Kunststoffwelle und des Stoffmaterials in Schließstellung; sowie
- Figur 11: eine Draufsicht der Ober- und Unterseite mit der mittleren Kunststoffwelle verbunden Zahnstangen

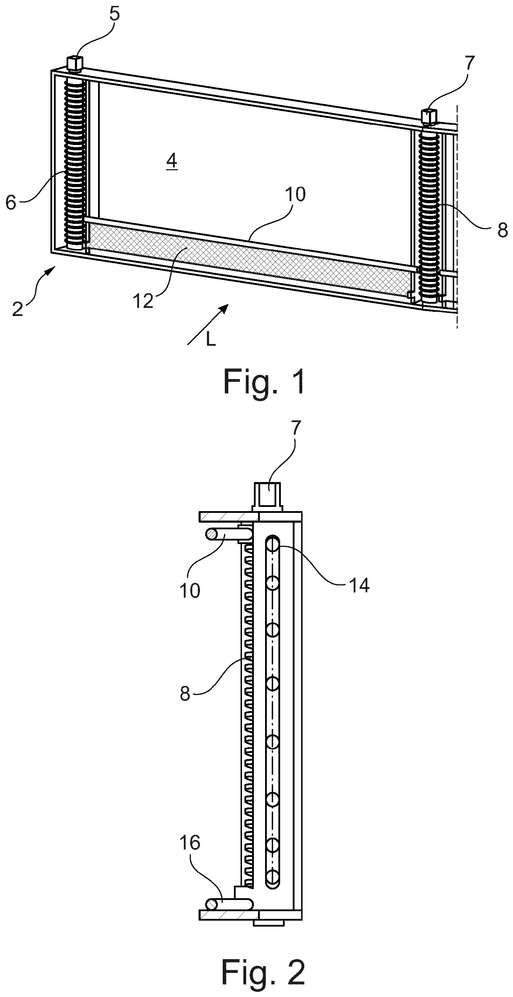

Die Figuren 1 bis 5 zeigen die nicht erfindungsgemäße Luftführungssteuerung mit Faltenbalg mit Schiebetechnik, im Wesentlichen umfassend eine eckigen, kastenartigen Rahmen 2, der in eine Luftöffnung eines Kühlergitters einsetzbar ist oder selbst die Luftöffnungen 4 bildet und in dem seitlich von der mittig definierten Luftöffnung 4 beidseitig Spindeln 6,8 mit Trapezgewinden drehbar aufgenommen sind, die über am oberen Ende ausgebildete Vierkante 6a, 8a mit einem entsprechenden Actuators antreibbar sind. Zwischen den beiden Spindeln und 6,8 erstreckt sich eines stangenartige Bewegungsschiene 10, an die seitlich in dem Trapezgewinde der Spindel 6, 8 geführt ist und an deren unteren Ende einen mit Falten vorgefertigter Faltenbalg 12 befestigt ist. Wie aus der Seitenansicht gemäß Figur 2 zu entnehmen ist, sind seitlich von der Bewegungsschiene 10 abragende Mittelstege vorgesehen, die seitlich in dem Rahmen 2 geführt sind. Am unteren Ende ist der Faltenbalg in einer sich ebenfalls zwischen den beiden Spindel 6, 8 quer erstreckenden Feststellschiene 16 eingespannt, welche diesen also unten straft.

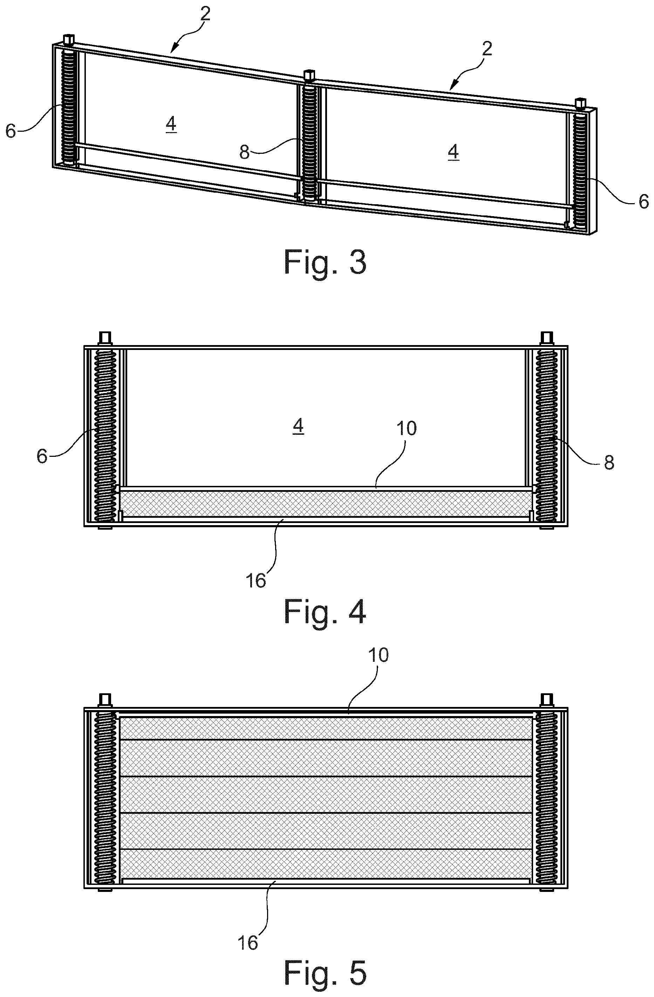

Die Figur 3 zeigt eine aus zwei derartigen Rahmen zusammengesetzte Rahmen-Baugruppe, welche also zwei Luftöffnungen 4 umfasst, die durch entsprechende Verschlussvorrichtungen wahlweise verschließbar sind.

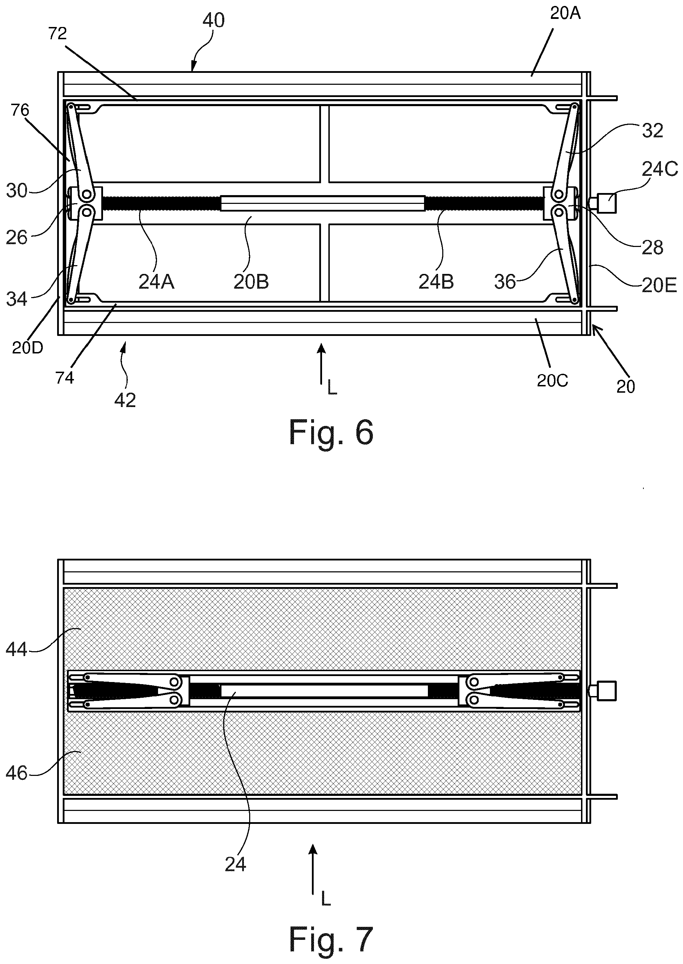

Die Figuren 6 und 7 zeigen Ansichten der Ausführungsform der Erfindung mit Verschlussmaterial (Stoffverschluss) mit Spindelantrieb.

Auch diese Ausführungsform kann einen Rahmen 20 umfassen, welcher eine darin umschlossene Luftöffnung umschließt und definiert.

Der Rahmen 20 wird gebildet durch zwei voneinander über drei Horizontalstege 20A, 20B, 20C beabstandete Vertikalstege 20D, 20E. Mittig im Bereich des mittigen Horizontalstegs 20B ist eine Verstellspindel 24 drehbar gelagert, die sich vorliegend also horizontal erstreckt und an ihren äußeren Enden zwei gegenläufige Gewindeabschnitte 24A und 24B aufweist. Am außenseitigen Ende ist ein Zapfen 24C vorgesehen, in den ein als vorzugsweise als Elektromotor ausgebildete Aktuator eingreifen kann zum Verstellen der Verstellspindel 24.

Auf den Gewindeabschnitten 24A, 24B der Verstellspindel 24 laufen als Muttern 26, 28 ausgebildete Mitnehmer, die über an beiden Enden drehbar angelenkte Verbindungsarme 30, 32, 34, 36 an dem unteren Ende von sich parallel zu der Verstellspindel 24 am Außenrand des Rahmens 42 angeordnete Stoffrollos 40, 42 angreifen.

Die Stoffrollos 40, 42 umfassen jeweils einen sich parallel zu der Verstellspindel 24 erstreckende und nicht sichtbare Federwickelwelle, also eine federvorgespannte Welle, auf welcher eine Stoffbahnen 44, 46 aufwickelbar ist bzw. in der in der Figur 6 dargestellten Öffnungsstellung durch die Federkraft der Federwickelwelle aufgewickelt ist.

Erst durch die Bewegung der Muttern 26, 28 nach innen gemäß Figur 7 ziehen die Verbindungsarme 30, 32, 34, 36 in bogenförmig ausgebildeten seitlichen Führungen 76 die Stoffbahnen 44, 46 in die in der Figur 7 dargestellte Schließstellung. Die seitlichen Führungen 76 können bogenförmige Führungsbahnen aufweisen, in welchen Verbindungsstifte geführt sind, die drehbar an den Stoffrollos 40, 42 angelenkt sind.

Für den Schutz des Stoffes der Stoffrollos 40, 42 können die Federwickelwellen durch Gehäusehauben abgedeckt sein, die auch Bestandteil des Rahmens 20 sein können.

Die Stoffbahnen 44, 46 können an dem der Verstellspindel 24 zugewandten Freiende Stabilisierungsleisten 72, 74 aufweisen, welche die Stoffrollos 40, 42 in Form bringen und halten, also die Stoffrollos spannen.

Obgleich die Ausführungsform hier die horizontale Anordnung, also mit sich in der Horizontalen erstreckender Verstellspindel 24, ausgeführt ist, kann dieses auch in der vertikalen Anordnung ausgebildet sein, bei welcher sich die Verstellspindel also in Einbaulage im Wesentlichen vertikal erstreckt.

Figuren 8 bis 11 zeigen die nicht erfindungsgemäße Luftführungssteuerung mit Schiebe-Drehmechanismus umfassend einen wiederum zwei Luftöffnungen 50, 52 umschließenden Rahmen 54, in dem sich mittig eine antreibbare Wickelwelle 56 erstreckt. Am unteren und oberen Ende der Wickelwelle 56 sind Zahnräder 58, 60 vorgesehen, welche auf dem Rahmen 54 ober- und unterseitig aufsitzende Zahnstangen 62, 64 kämen. Durch Rotation der Wickelwelle 56 mittels eines Actuators wird somit einer mit Innenseiten an der Wickelwelle 56 befestigter Faserverbundwerkstoffe 66, an dessen Außenrand Stäbe 68, 70 vorgesehen sind, auf die Wickelwelle 56 aufgewickelt, wobei die Stäbe 68, 70 mit den hakenartigen Enden der Zahnstange 62, 64 verbunden sind.

Durch Drehung der Wickelwelle 56 werden die Zahnstangen 62, 64 somit nach innen und nach außen auf dem Rahmen 54 verschoben und Öffnen und Schließen da die Luftöffnungen 50, 52 innerhalb des Rahmens 54.

### Bezugszeichenliste

- 2: Rahmen
- 3: Luftöffnung
- 6, 8: Spindel
- 5, 7: Vierkant
- 10: Bewegungsschiene
- 12: Faltenbalg
- 14: Mittelsteg
- 16: Feststellschiene
- 20: Rahmen
- 20A, 20B, 20C: Horizontalsteg
- 20D, 20E: Vertikalsteg
- 22: Luftöffnungen
- 24: Verstellspindel
- 24A, 24B: Gewindeabschnitt
- 24C: Zapfen
- 26, 28: Mutter
- 30, 32, 34, 36: Verbindungsarm
- 40, 42: Stoffrollo
- 42: Rahmen
- 50, 52: Luftöffnungen
- 54: Rahmen
- 56: Wickelwelle
- 58,60: Zahnrad
- 62,64: Zahnstangen
- 66: Faserverbundwerkstoff
- 68,70: Kunststoffstab
- 72, 74: Stabilisierungsleiste
- 76: Führung

## Patentansprüche

1. Luftführungssteuerung mit einem Rahmen (20), der eine Luftöffnung (22) zum Hindurchströmen von entlang einer Luftströmungsrichtung (L) strömender Luft umgibt, einer einen Stoff oder ein Gewebe umfassende Verschlussvorrichtung, die zwischen einer die Luftöffnung (22) freigebenden Öffnungsstellung und einer die Luftöffnung (22) zumindest teilweise verschließenden Schließstellung mittels einer Verstellvorrichtung verstellbar ist zur selektiven Freigabe und zum Verschließen der Luftöffnung, wobei die Verschlussvorrichtung ein selbstaufrollendes Stoffrollo mit einer sich quer zur Luftöffnung (22) erstreckenden und federvorgespannten Federwickelwelle umfasst, auf welcher der Stoff mit einem ersten Stoffende aufwickelbar ist, wobei die Verstellvorrichtung eine sich ebenfalls quer zur Luftöffnung (22) und parallel versetzt zur Federwickelwelle erstreckende, drehbar gelagerte Verstellspindel (24) mit gegenläufigen Gewindeabschnitten (24A, 24B) an gegenüberliegenden Enden umfasst, wobei auf den Gewindeabschnitten (24A, 24B) korrespondierende Mitnehmer (26, 28) laufen, und wobei die Mitnehmer (26, 28) über drehbar an diesen (26, 28) angelenkte Verbindungsarme (30, 32) mit einem zweiten Stoffende des Stoffrollos verbunden sind.

2. Luftführungssteuerung nach Anspruch1, **DADURCH GEKENNZEICHNET, dass** diese zwei Federwickelwellen umfasst, die jeweils an einem äußeren Ende des Rahmens (22) angeordnet sind, DASS die Verstellspindel (24) in der Mitte der Luftöffnung (22) angeordnet ist und dass je ein Stoffrollo in gleichem Abstand von der mittig angeordneten Verstellspindel (22) angeordnet ist.

3. Luftführungssteuerung nach Anspruch 1 oder 2, **DADURCH GEKENNZEICHNET, DASS** diese Führungen (76) für die Verbindungsarme (30, 32, 34, 36) umfasst..

4. Luftführungssteuerung nach Anspruch 3, **DADURCH GEKENNZEICHNET, dass** die Führungen (76) als Kullissenführungen ausgebildet sind.

5. Luftzuführungssteuerung nach einem der vorhergehenden Ansprüche, **DADURCH GEKENNZEICHNET, dass** die Mitnehmer als Muttern (26, 28) ausgebildet sind.

6. Luftführungssteuerung nach einem der vorhergehenden Ansprüche, **DADURCH GEKENNZEICHNET, DASS** der Stoff an einem der Verstellspindel zugewandten Freiende eine Stabilisierungsleiste (72, 74) aufweist.

7. Luftführungssteuerung nach Anspruch 6, **DADURCH GEKENNZEICHNET, DASS** der Stoff und die Stabilisierungsleiste (72, 74) als Kunststoffspritzgussteile ausgebildet sind

8. Luftführungsteuerung nach Anspruch 7, **DADURCH GEKENNZEICHNET, DASS** der Stoff und die Stabilisierungsleiste (72, 74) in einem Spritzgusszyklus hergestellt sind.

9. Luftführungssteuerung nach einem der vorhergehenden Ansprüche, **DADURCH GEKENNZEICHNET, DASS** mehrere Einzelrahmen mit diesen zugeordneten Verschlussvorrichtungen modulartig zu einem Gesamtrahmen zusammensetzbar sind.

10. Rahmen (2; 20; 54) ausgebildet zum Einsetzen in einen Kühlergitter eines Kraftfahrzeugs, umfassend eine Luftführungssteuerung nach einem der vorhergehenden Ansprüche.

11. Kühlergitter für ein Kraftfahrzeug umfassend mindestens eine Luftführungssteuerung nach einem der vorhergehenden Ansprüche.

## Claims

1. Air flow control device with a frame (20) surrounding an air opening (22) for passage of air flowing along an air flow direction (L), a closure device comprising a fabric or a mesh, which is movable between an opening position exposing the air opening (22) and a closing position at least partially closing the air opening (22) by means of an adjustment device for selectively exposing and closing the air opening, wherein the closure device comprises a selfrolling fabric roller blind with a spring-biased spring-wound shaft extending transversely to the air opening (22), onto which the fabric can be wound with a first end of the fabric, wherein the adjustment device comprises a rotatably mounted adjustment spindle (24) also extending transversely to the air opening (22) and parallel to and offset from the spring-wound shaft, with counter-rotating threaded sections (24A, 24B) at opposite ends, with corresponding drivers (26, 28) running on the threaded sections (24A, 24B), and wherein the drivers (26, 28) are connected to a second fabric end of the fabric roller blind via connecting arms (30, 32) pivotally mounted thereon (26, 28).

2. Air flow control according to claim 1, **CHARACTERIZED IN THAT** it comprises two spring-wound shafts, each of which is arranged at an outer end of the frame (22), **IN THAT** the adjusting spindle (24) is arranged in the center of the air opening (22) and **in that** a fabric roller blind is arranged at an equal distance from the centrally arranged adjusting spindle (22).

3. Air guide control according to claim 1 or 2, **CHARACTERIZED IN THAT** it comprises guides (76) for the connecting arms (30, 32, 34, 36).

4. Air flow control according to claim 3, **CHARACTERIZED IN THAT** the guides (76) are designed as slide guides.

5. Air supply control according to one of the preceding claims, **CHARACTERIZED IN THAT** the drivers are designed as nuts (26, 28).

6. Air guide control according to one of the preceding claims, **CHARACTERIZED IN THAT** the fabric comprises a stabilizing strip (72, 74) at a free end facing the adjustment spindle.

7. Air flow control according to claim 6, **CHARACTERIZED IN THAT** the fabric and the stabilizing strip (72, 74) are designed as plastic injection molded parts.

8. Air flow control according to claim 7, **CHARACTERIZED IN THAT** the fabric and the stabilizing strip (72, 74) are produced in a single injection molding cycle.

9. Air flow control according to one of the preceding claims, **CHARACTERIZED IN THAT** a plurality of individual frames with associated closure devices can be assembled in a modular fashion to form an overall frame.

10. Frame (2; 20; 54) designed for insertion into a radiator grille of a motor vehicle, comprising an air flow control device according to one of the preceding claims.

11. Radiator grille for a motor vehicle comprising at least one air flow control device according to one of the preceding claims.

## Revendications

1. Commande de guidage d'air, comprenant un cadre (20) qui entoure un orifice d'air (22) pour le passage de l'air s'écoulant le long d'une direction d'écoulement d'air (L), un dispositif de fermeture qui comprend un tissu ou une étoffe et peut être déplacé, au moyen d'un dispositif de réglage, entre une position d'ouverture libérant l'orifice d'air (22) et une position de fermeture fermant au moins partiellement l'orifice d'air (22) afin de libérer et de fermer sélectivement l'orifice d'air, le dispositif de fermeture comprenant un store en tissu à enroulement automatique qui comprend un arbre d'enroulement à ressort s'étendant transversalement à l'orifice d'air (22) et précontraint par un ressort, arbre sur lequel le tissu peut être enroulé avec une première extrémité de tissu, le dispositif de réglage comprenant une broche de réglage (24) montée de façon mobile en rotation, laquelle s'étend également transversalement à l'orifice d'air (22) et est décalée parallèlement à l'arbre d'enroulement à ressort et présente, aux extrémités opposées, des portions filetées (24A, 24B) qui tournent dans des sens opposés, sachant que des entraîneurs (26, 28) correspondants se déplacent sur les portions filetées (24A, 24B) et que les entraîneurs (26, 28) sont reliés à une deuxième extrémité de tissu du store en tissu par des bras de liaison (30, 32) articulés de manière rotative sur ceux-ci (26, 28).

2. Commande de guidage d'air selon la revendication 1,
**caractérisée en ce que** celle-ci comprend deux arbres d'enroulement à ressort qui sont disposés chacun à une extrémité extérieure du cadre (22),
**en ce que** la broche de réglage (24) est disposée au centre de l'orifice d'air (22), et
**en ce qu'**un store en tissu respectif est disposé de façon équidistante de la broche de réglage (22) disposée au centre.

3. Commande de guidage d'air selon la revendication 1 ou 2,
**caractérisée en ce que** celle-ci comprend des guides (76) pour les bras de liaison (30, 32, 34, 36).

4. Commande de guidage d'air selon la revendication 3,
**caractérisée en ce que** les guides (76) sont réalisés sous forme de guides à coulisse.

5. Commande de guidage d'air selon l'une des revendications précédentes, **caractérisée en ce que** les entraîneurs sont réalisés sous forme d'écrous (26, 28).

6. Commande de guidage d'air selon l'une des revendications précédentes, **caractérisée en ce que** le tissu comprend une barre de stabilisation (72, 74) à une extrémité libre tournée vers la broche de réglage.

7. Commande de guidage d'air selon la revendication 6,
**caractérisée en ce que** le tissu et la barre de stabilisation (72, 74) sont réalisés sous forme de pièces moulées par injection de matière plastique.

8. Commande de guidage d'air selon la revendication 7,
**caractérisée en ce que** le tissu et la barre de stabilisation (72, 74) sont fabriqués en un seul cycle de moulage par injection.

9. Commande de guidage d'air selon l'une des revendications précédentes, **caractérisée en ce que** plusieurs cadres individuels peuvent être assemblés à la manière d'un module avec des dispositifs de fermeture qui leur sont associés, afin de donner un cadre global.

10. Cadre (2 ; 20 ; 54) conçu pour être inséré dans une grille de radiateur d'un véhicule automobile,
comprenant une commande de guidage de l'air selon l'une des revendications précédentes.

11. Grille de radiateur pour un véhicule automobile,
comprenant au moins une commande de guidage d'air selon l'une des revendications précédentes.
